# EUROPEAN PATENT SPECIFICATION

(11) **EP 2 491 243 B1**
(45) Date of publication and mention of the grant of the patent: **12.03.2014**
(21) Application number: 10721624.4
(22) Date of filing: 12.03.2010
(51) Int. Cl.: F03D 1/02

(54) **WIND TURBOGENERATOR POWER UNIT**
ANTRIEBSAGGREGAT FÜR WINDTURBOGENERATOR
UNITÉ D'ALIMENTATION DE TURBOGÉNÉRATRICE ÉOLIENNE

(30) Priority: 12.03.2009 BG 11034109
(43) Date of publication of application: 29.08.2012
(73) Proprietor: Tanev, Vasko Asenov, Sofia-1444 (BG)
(72) Inventor: Ivan Yordanov Petrov, 1137 Sofia (BG)
(86) International application number: PCT/BG2010/000004
(87) International publication number: WO 2010/102355

(56) References cited:
- GB-A- 182 700
- GB-A- 1 504 911
- US-A- 4 324 985

## Description

### Field of technology

The invention relates to wind turbogenerator power unit, converting the kinetic power of wind into electric power and its transmission in the electricity grid or power supply of individual or local consumers of electricity.

### Preceding status of technology

Wind propeller generators for producing electric power with a propeller and an electric generator located on a high tower are known.

Wind system for producing electric power is known, in which, on the purpose of increasing efficiency, two co-axial wind turbines are installed in narrowed outlet of funnels with circular cross section, with twisted channels carved into walls. *

The drawback of the first ones is that because of the large distance between the blades and the fact that they are frontally attacked by the wind, they have low productivity.

The drawback of the second system is that the twisted channels at the inlet of the round funnel cause harmful turbulence, which reduces the forward velocity of wind flow. Furthermore, this system does not provide efficient operation at low wind speeds, and at very high wind speeds it could be destroyed. An example is described in GB-1504911.

### Purpose and essence of the invention.

The purpose of the invention is to create wind turbogenerator power unit, which produces electric power from wind in a wide range of wind speeds, and provides laminarity and tangentiality of air flow and possibity for it to be increased or reduced, united or divided into single flow, double flow and triple flow streams, depending on wind speed or on the required electric power. This purpose is achieved as a funnel with a rectangular cross-section is mounted on a vertical tower so that it can rotate at 360 degrees around its support.

To the broad input opening of the funnel, frontal closing valves are attached hingedly. Inside, in the middle portion, distributing valves are mounted hingedly, and at the rear narrow portion three conical-cylindrical holes are formed. In each conical-cylindrical hole radially curved ribs are located, which guide the air stream. In the center of each conical-cylindrical hole, the guiding ribs are united by a hub, in which a hollow axis is pressed on, and on the hub, the hub of the first turbine and the armature of the electric generator are mounted by the means of bearings. The connection between them is implemented through tooth coupling. By the means of bearings, the hub of the second turbine is mounted to the armature the electric generator. In the hub of the second turbine, the electric generator pole electromagnets with exciting coils are attached rigidly.

In a simplified version it is possible that the turbogenerator has one turbine with permanent magnets attached to the hub of the turbine and the armature is mounted to the hollow axle rigidly.

### Advantage of the invention.

The advantage of the invention vs. the known wind generators and wind systems lies in the fact that the kinetic power of wind is used more completely and in a much wider range of its speed, allowing the air flow to be directed to the one, to the two, or to the three turbo-generators through the distribution valves, so that they operate in an optimal mode, with a maximum efficiency output. The closing valves at the inlet allow the intensity of wind flow in the funnel to be adjusted or stopped in hurricane winds. Due to the integrated in the turbine hubs electric generator any drives are avoided (gear, hydraulic, etc.), which increases the mechanical efficiency output.

### Description of the enclosed drawings.

Fig. 1 - a schematic representation of a vertical section of the turbogenerator power unit, with three possible positions of the closing valves shown:
   X - completely open in weak, in moderate and in high winds.
   Y - half-open in stormy winds.
   Z - completely closed in hurricane winds.
Fig. 2 - a schematic representation of a horizontal section of turbogenerator power unit, with positions of the distributing valves shown:
   A - in weak wind, the middle turbogenerator works.
   C - in moderate wind, the lateral turbogenerators work.
   B - in strong and stormy wind, the three turbo-generators work.

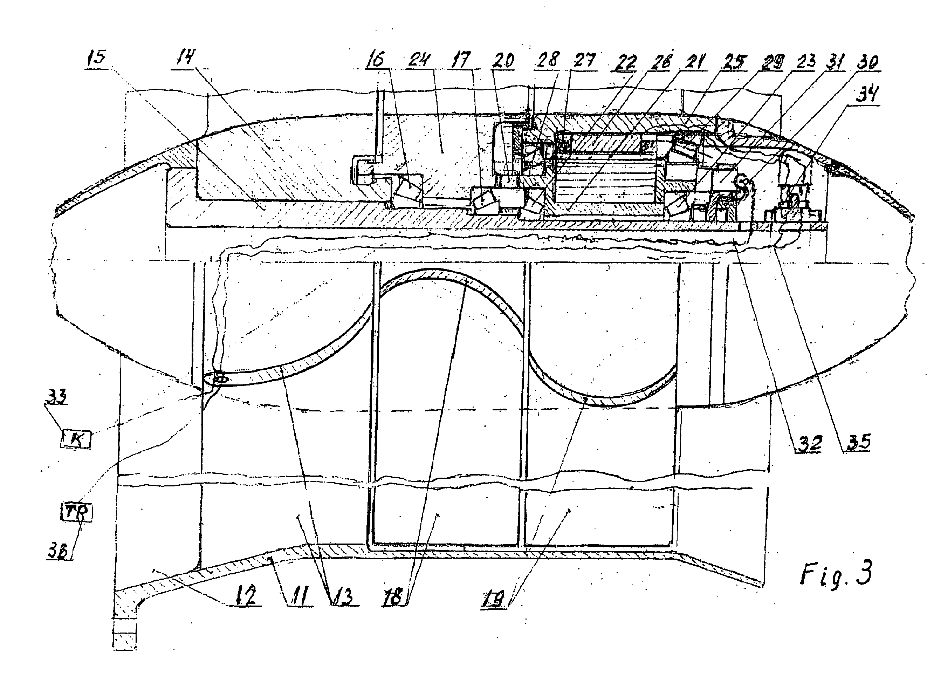

Fig. 3 - a vertical section of an example implementation of the turbogenerator with integrated armature and electromagnets in the turbine hubs.

### Example implementation of the invention.

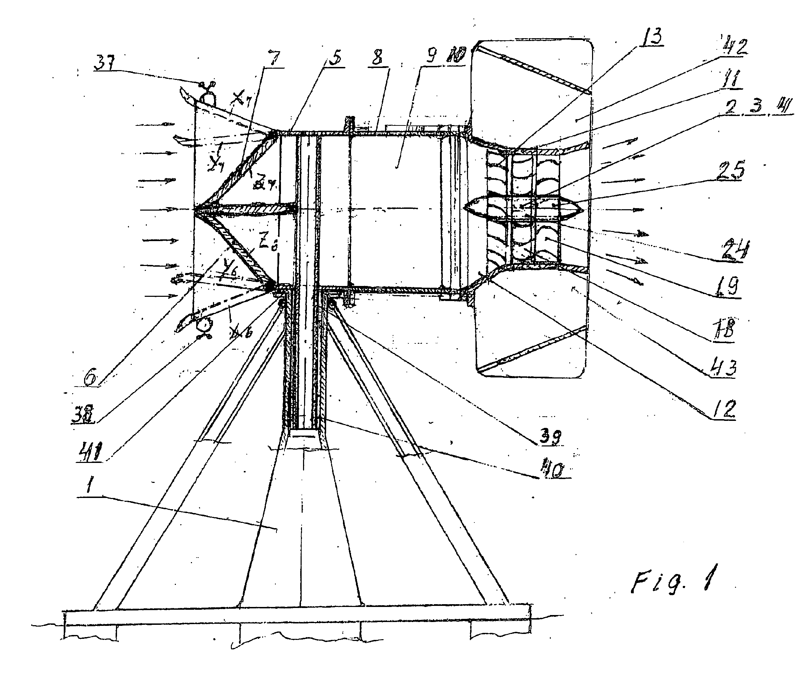

The wind turbogenerator power unit, according to the invention, is mounted (Fig. 1) on the vertical tower 1 by the means of the radial bearings 39 and 40 and the axial bearing 41.

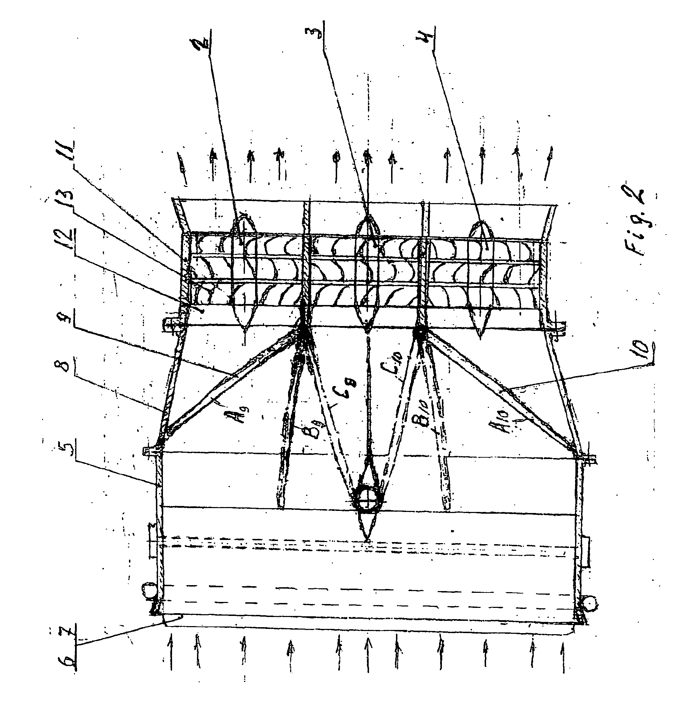

The power unit includes: a funnel 5 with rectangular cross-section, to whose wide inlet the front closing valves (6 and 7) are attached hingedly. In the the middle portion 8 of the funnel 5 the distributing valves 9 and 10 are mounted hingedly (fig. 2), and in the rear narrow part 11 of the funnel 5 in the three parallel conical - cylindrical holes the turbo-generators 2, 3 and 4 are located. In front of each turbogenerator, to the narrowed part 11 of the funnel 5, radially located, curved guiding ribs 13 in the center of which (fig. 2) a hub 14 is formed with an opening in which the hollow axle 15 is pressed on, on which by the means of the bearings 16 and 17 the hub 24 of the first turbine 18 and by the means of the bearings 22 and 23, the armature 21 of the electrical generator are mounted, as the connection between them is implemented through the frontal tooth coupling 20. In the hub 25 of the second turbine 19 electromagnets 26 with exciting coils 27 are attached rigidly and the hub 25 is mounted to the armature 21 via bearings 28 and 29. To the free end of the hollow axle 15 a brush holder 30 with current carrying brushes 31, which via cable 32 are connected to load 33, and current-supply rings 34, connecting by the cable 35 the coils 27 of the electromagnets 26 to the pulse regulator 36, are attached. At the inlet of the funnel 5 the sensors (fig. 1) 37 and 38 for the wind speed are attached.

### Advantages of the turbogenerator power unit

The first advantage of the turbogenerator power unit lies in the fact that, due to the possibility that the air flow in the funnel can be stopped, reduced and divided into one, two or three streams, the production of electric power at low and at very high wind speeds is ensured and that destruction of the turbines in hurricane winds is prevented. There are no blades to frighten the birds and animals.

The second advantage lies in the fact that due to the rectangular shape of the funnel, the occurrence of turbulence in the wind flow before entering into the channels between the guiding ribs becomes less possible.

The third advantage lies in the fact that the guiding ribs provide tangentiality and laminarity of the air stream throughout its width, before attacking the blades of the first turbine.

The fourth advantage lies in the fact that wind turbines rotate directly (without intermediate gear or hydraulic drives) the armature and the inducer of the electric generator, thereby reducing mechanical losses and increasing the total efficiency output.

These four advantages guarantee that high efficiency in the use of wind turbogenerator power unit is achieved, so that it produces three times more power.

The wind turbogenerator power unit works as follows:
At the command "**Run**" the sensors 37 and 38 measure the wind speed at the inlet of the funnel 5 and give a signal to the control center (a computer), which determines the mode of operation of the power unit.
   - Weak wind - The internal distributing valves 9 and 10 are open to a maximum extent - position A. The front closing valves 6 and 7 are open to a maximum extent - position X. The wind flow in the funnel 5 is focused in one stream and revolves only the middle turbogenerator 3.
   - Moderate wind - The internal distributing valves 9 and 10 are closed - position C. The wind flow is divided into two streams and revolves the two lateral turbogenerators 2 and 4.
   - Strong wind - the internal distribution valves 9 and 10 come to a middle position - C. The wind flow is divided into thre streams. The three turbogenerators - 2, 3 and 4 work..
   - Windstorm - the internal distribution valves come to a middle position - C. The front closing valves 6 and 7 a middle position - Y. The three turboenerators 2, 3 and 4 work at full power.
   - Hurricane wind - The front closing valves 6 and 7 close the inlet of the funnel 5 completely, position 2, protecting the turbogenerators from damaging and giving streamlined form of the power unit.
By variation, through the pulse regulator 36, of the value of the excitation current in the coils 27 of electromagnets 26, the operation of the electric generators in different modes of load by the consumers 33 is optimized.
In strong or turbulent winds and reduced consumption, the front closing valves 6 and 7 reduce the cross section of the inlet of the funnel 5, and the inner distributing valves 9 and 10 are in position corresponding to the consumed electric power - A, C or B.
At the **STOP** command the front closing valves 6 and 7 close tightly the inlet of the funnel 5, position - 2.

## Claims

1. A Wind Turbogenerator Power Unit mounted on a vertical tower (1), so that it can rotate at 360 degrees around its support, including a funnel with turbo-generators located in its narrowed outlet, with two rotating in different directions co-axial turbines, **characterized by** the fact that the cross-section of the funnel 5 is rectangular and to its wide inlet the front-closing valves (6 and 7) are mounted hingedly and within the middle portion (8) of the funnel (5) the distributing valves (9 and 10) are mounted hingedly and in the rear narrow portion (11) of the funnel (5) there are three parallel cylindrical-conical holes (12), in which radially curved guiding ribs (13) are located, in the center of which hubs (14) are formed with an opening in which the hollow axle (15) is pressed on and the turbogenerators are mounted on said hollow axle (15).

2. A Wind Turbogenerator Power Unit according to claim 1, **characterized by** the fact that an armature (21) and a electromagnet (26) of the inducer the electric generator are integrated with the turbines (18 and 19) without intermediate gears.

3. A Wind Turbogenerator Power Unit according to claims 1 and 2 **characterized by** the fact that the hub (24) of the first turbine (18) is mounted by the means of bearings (16 and 17) to the hollow axle (15), the armature (21) of the electric generator is also mounted by the means of the bearings (22 and 23) to said hollow axle (15), as the connection between them is implemented through a frontal coupling (20), and the hub (25) of the second turbine (19) is mounted by the means of the bearings (28 and 29) on the armature (21) of the electric generator.

4. A Wind Turbogenerator Power Unit according to claims 1, 2 and 3, **characterized by** the fact that the electromagnets (26) of the inducer of the electric generator are mounted in the hub (25) of the second turbine (19).

5. A Wind Turbogenerator Power Unit according to claims 1 to 4, **characterized by** the fact that the brush holder (30) of the current-carrying brushes (31) and the current-supply rings (34) of the excitation coils (27) of the electromagnets (26) are mounted, at the end of the hollow axle (15).

6. A Wind Turbogenerator Power Unit according to claims from 1 to 5, **characterized by** the fact that the sensors (37 and 38) measuring the speed of the wind entering the funnel (5) are located, at the inlet of the funnel (5).

7. A Wind Turbogenerator Power Unit according to claims from 1 to 6, **characterized by** the fact that direction stabilizers (42 and 43) are attached rigidly to the rear narrowed portion (11) of funnel (5).

## Patentansprüche

1. Windkraftanlage mit Turbogenerator, der auf einem vertikalen Turm (1) montiert ist, so dass er sich um 360 Grad um seinen Support drehen kann, einschließlich eines Trichters mit Turbogeneratoren, die sich in seinem schmalen Ausgang befinden, mit zwei sich in unterschiedliche Richtungen drehenden koaxialen Turbinen, **dadurch gekennzeichnet, dass** der Querschnitt des Trichters 5 rechteckig ist und die vorderen Verschlussklappen (6 und 7) in seinem weiten Öffnung gelenkig montiert sind, und im mittleren Teil (8) des Trichters (5) die Verteilerklappen (9 und 10) gelenkig montiert sind, und es im hinteren schmalen Teil (11) des Trichters (5) drei parallele zylindrische kegelförmige Öffnungen (12) gibt, in welchen radial gekrümmte Führungsrippen (13) angeordnet sind, in deren Zentrum Naben (14) mit einer Öffnung angeordnet sind, in welcher die Hohlachse (15) angedrückt ist und die Turbogeneratoren an dieser Hohlachse (15) montiert sind.

2. Windkraftanlage mit Turbogenerator nach Anspruch 1, **dadurch gekennzeichnet, dass** ein Anker (21) und ein Elektromagnet (26) des Induktors des elektrischen Generators in den Turbinen (18 und 19) ohne Zwischengetriebe integriert sind.

3. Windkraftanlage mit Turbogenerator nach Ansprüchen 1 und 2, **dadurch gekennzeichnet, dass** die Nabe (24) der ersten Turbine (18) mittels Lager (16 und 17) an der Hohlachse (15) montiert ist, indem der Anker (21) des elektrischen Generators ebenfalls an derselben Hohlachse (15) mittels Lager (22 und 23) montiert ist; die Verbindung zwischen ihnen durch eine frontale Kupplung (20) erfolgt, und die Nabe (25) der zweiten Turbine (19) am Anker (21) des elektrischen Generators mittels Lager (28 und 29) montiert ist.

4. Windkraftanlage mit Turbogenerator nach Ansprüchen 1, 2 und 3, **dadurch gekennzeichnet, dass** die Elektromagnete (26) des Induktors des elektrischen Generators in der Nabe (25) der zweiten Turbine (19) montiert sind.

5. Windkraftanlage mit Turbogenerator nach Ansprüchen 1 bis 4, **dadurch gekennzeichnet, dass** der Bürstenhalter (30) der Stromzuführungsbürsten (31) und der Stromzuführungsringe (34) der Erregungsspulen (27) der Elektromagnete (26) am Ende der Hohlachse (15) montiert sind.

6. Windkraftanlage mit Turbogenerator nach Ansprüchen 1 bis 5, **dadurch gekennzeichnet, dass** die Messsensoren (37 und 38) für die Geschwindigkeit des in den Trichter (5) eintretenden Windes am Eingang des Trichters (5) angeordnet sind.

7. Windkraftanlage mit Turbogenerator nach Ansprüchen 1 bis 6, **dadurch gekennzeichnet, dass** die Richtungsstabilisatoren (42 und 43) an den hinteren schmalen Abschnitt (11) des Trichters (5) fest angeschlossen sind.

## Revendications

1. Une éolienne montée sur une tour verticale (1), de façon à tourner à 360 degrés atour de son arbre de support, comprenant une nacelle abritant dans sa partie plus étroite les génératrices à deux turbines coaxiales tournant en sens opposé, **caractérisée par le fait que** la section transversale de la nacelle 5 est rectangulaire et les vannes antérieures de fermeture (6 et 7) sont montées en pivot sur l'orifice large, et les vannes distributrices (9 et 10) sont montées en pivot dans la partie centrale médiale (8) de la nacelle (5), et dans la partie étroite à l'arrière (11) de la nacelle (5) se trouvent trois orifices cylindriques-coniques parallèles (12) auxquels sont fixées pâles orientables radialement inclinées (13), dans le centre de laquelle les moyeux (14) sont formées avec une ouverture dans laquelle l'axe creux (15) est pressé sur les turboalternateurs et sont montés sur ledit axe creux (15).

2. Une éolienne selon la prétention 1, **caractérisée par le fait que** une armature (21) et un électro-aimant (26) de l'inducteur de la génératrice électrique sont intégré avec les turbines (18 et 19) sans engrenages intermédiaires.

3. Une éolienne selon les prétentions 1 et 2, **caractérisée par le fait que** le moyeu (24) de la première turbine (18) est installée sur l'axe creux (15) à l'aide des roulements (16 et 17), sur ce même axe creux (15) à l'aide des roulements (22 et 23) étant installé l'armature (21) de la génératrice électrique aussi; la connexion entre eux est établie par un accouplement frontal (20), et le moyeu (25) de la deuxième turbine (19) est installé sur l'armature (21) de la génératrice électrique à l'aide des roulements (28 et 29).

4. Une éolienne selon les prétentions 1, 2 et 3, **caractérisée par le fait que** les électro-aimants (26) de l'inducteur de la génératrice électrice sont installés sur le moyeu (25) de la deuxième turbine (19).

5. Une éolienne selon les prétentions de 1 à 4, **caractérisée par le fait que** le porte-balais (30) des balais (31) et les anneaux conducteurs (34) des bobines d'excitation (27) des électro-aimants (26) sont installés à la partie arrière de l'axe creux (15).

6. Une éolienne selon les prétentions de 1 à 5, **caractérisée par le fait que** les senseurs (37 et 38), mesurant la vitesse du vent entrant dans la nacelle (5) sont situés à l'entrée de la nacelle (5).

7. Une éolienne selon les prétentions de 1 à 6, **caractérisée par le fait que** les stabilisateurs des directions (42 et 43) sont fixés à la partie étroite à l'arrière (11) de la nacelle (5).
